# EUROPÄISCHE PATENTSCHRIFT

(11) **EP 3 561 769 B1**
(45) Veröffentlichungstag und Bekanntmachung des Hinweises auf die Patenterteilung: **22.01.2025**
(21) Anmeldenummer: 19169740.8
(22) Anmeldetag: 17.04.2019
(51) Int. Cl.: G06T 7/00, G01N 21/88, G01B 5/00, G01B 11/24, G06T 5/94, G06V 10/44, G06V 10/764, G06V 10/82, G01N 21/898, G01N 21/95, G01N 21/954

(54) **VERFAHREN ZUR ERKENNUNG VON DISKONTINUITÄTEN AN DER OBERFLÄCHE EINES KÖRPERS**
METHOD FOR DETECTING DISCONTINUITIES ON THE SURFACE OF A BODY
PROCÉDÉ DE DÉTECTION DES DISCONTINUITÉS SUR LA SURFACE D'UN CORPS

(30) Priorität: 24.04.2018 AT 503432018
(43) Veröffentlichungstag der Anmeldung: 30.10.2019
(73) Patentinhaber: EYYES GmbH, 3494 Gedersdorf (AT)
(72) Erfinder: TRAXLER, Johannes, 3500 Imbach (AT)
(74) Vertreter: Burgstaller, Peter

(56) Entgegenhaltungen:
- DE-C1- 10 102 387
- US-A1- 2013 073 221
- US-A1- 2017 046 615
- EDDINS STEVE: "Finding bright objects", 19 October 2007 (2007-10-19), pages 1 - 4, XP055871774, Retrieved from the Internet <URL:https://blogs.mathworks.com/steve/2007/10/19/finding-bright-objects/> [retrieved on 20211210]

## Beschreibung

Die im Folgenden diskutierte Erfindung betrifft ein Verfahren zur Detektion von geometrischen Diskontinuitäten an der Oberfläche der Mantelfläche eines Körpers, welcher Körper mit einer Lichtstrahlen emittierenden Lichtquelle beleuchtet wird und welcher Körper mittels einer Bilddaten ausgebenden Kamera aufgenommen wird, welche Bilddaten Farbeigenschaftswerte an einem Bildpunkt umfassen.

Eine geometrische Diskontinuität stellt definitionsgemäß eine Abweichung der geometrischen Eigenschaften der Oberfläche des Körpers dar. Eine geometrische Diskontinuität bedingt eine im Vergleich zum restlichen Körper geänderte Menge von reflektierten und/oder transmittierten Lichtstrahlen. Bei einem aus einem schweißbaren Werkstoff hergestellten Körper kann eine Diskontinuität eine an der Oberfläche des Körpers sichtbare Schweißnaht darstellen. Eine geometrische Diskontinuität kann auch eine an der Oberfläche sichtbare Deformation oder ein Bruch sein.

Der Körper kann aus einem lichtundurchlässigen Werkstück hergestellt sein. Der Körper kann beispielsweise ein metallisches Werkstück, ein Kunststoff oder ein Werkstoff mit einem Anteil von natürlichen Rohstoffen wie beispielsweise ein Holz oder ein Holzwerkstoff sein.

Die Farbeigenschaftswerte der an einem Bildpunkt umfassenden Bilddaten umfassen sohin einen Farbeigenschaftswert und eine Koordinatenangabe oder andere geeignete Ortsangaben des den Farbeigenschaftswert aufweisenden Bildpunktes.

Da das erfindungsgemäße Verfahren auf der Anwendung der Bilderfassung basiert, ist dieses auf die Detektion von auf der Oberfläche sichtbaren Diskontinuitäten beschränkt.

Nach dem Stand der Technik werden Bildaufnahmen zur Detektion von Diskontinuitäten angewandt. Ein möglicher Ansatz hierzu ist der Vergleich einer Bildaufnahme eines keine Diskontinuitäten aufweisenden Körpers und einer weiteren Bildaufnahme eines zumindest eine Diskontinuität aufweisenden weiteren Körpers. Es zeigte sich jedoch, dass lediglich auf einen Vergleich basierende Verfahren nicht hinreichend genau und nicht hinreichend stabil gegen Fehler in den Bildaufnahmen sind.

Ein Verfahren nach dem Stand der Technik, welches Verfahren auf einem Vergleich von Bilddaten beschränkt ist, liefert insbesondere bei einer Anwendung zur Erkennung von Diskontinuitäten in natürlichen Werkstücken wie beispielsweise Holz keine brauchbaren Ergebnisse, da die möglichen Diskontinuitäten zu unterschiedlich sind.

DE102007014475 beschreibt ein Verfahren, bei welchem Verfahren neben einer physikalischen Eigenschaft auch ein weiterer Wert bestimmt wird. Im Unterschied zum dem im Folgenden beschriebenen Verfahren basiert das in DE102007014475 offenbarte Verfahren sohin auf der Ermittlung von zwei Werten.

US20020088952 beschreibt ein Verfahren, welches Verfahren auf der Überlagerung von Messbildern mit Filtern und Referenzfunktionen basiert. Es findet sich in diesem kein Hinweis auf die Ausbildung der Filter oder Ausformung der Referenzfunktion, dass diese unter Ausnutzung des Koinzidenzeffektes Diskontinuitäten sichtbar macht.

DE102016114465 basiert auf dem Vergleich von Messwerten und Referenzwerten, was zu keinem zufriedenstellenden Ergebnis führt.

EP1304560 basiert auf der Verwendung von elektromagnetischen Diagnosestrahlen und keiner Bildtechnik.

US2017046615, US2013073221 und DE10102387 offenbaren nicht die Ermittlung einer Abweichung eines Farbeigenschaftswertes von einem Farbdurchschnittsmaß oder einem Dominanzfarbeigenschaftswert. Diese Dokumente offenbaren auch nicht die Überlagerung einer die Farbeigenschaftswerte beschreibenden Funktion mit einer Referenzfunktion.

DE 101 02 387 beschreibt ein optisches Bilderkennungsverfahren zur Feststellung und Bewertung von Defekten einer Probenoberfläche wie einer Lackoberfläche. Die zu untersuchende Oberfläche wird zunächst mit kollimiertem Licht bestrahlt und die von ihr zurückgeworfene Strahlung einer ortsauflösenden Bildverarbeitungseinrichtung zugeführt. Schäden im Lack erscheinen bei der Aufnahme eines Bildes mit kollimiertem Licht als dunkle Bereiche. Daraus wird mittels eines Schwellwerts eine Maske generiert, bei der die maskierten Bereiche durch die hellen, defektfreien Bereiche des Bildes und die unmaskierten Bereiche durch die dunklen Defektbereiche des Bildes gebildet werden.

Das erfindungsgemäße Verfahren stellt sich die Aufgabe, die menschliche Erkennung von Diskontinuitäten in einer möglichst ähnlichen Weise durch ein Computer-implementiertes Verfahren abzubilden, was im Folgenden eingehend erläutert wird. Diese Aufgabestellung ist damit verbunden, dass das erfindungsgemäße Verfahren gegen Störeinflüsse stabil ist. Erfindungsgemäß wird dies durch den Anspruch 1 erreicht.

Eine Person nimmt über das Auge eine Diskontinuität in erster Linie durch Farbunterschiede wahr und versucht, Bereiche mit ähnlichen Farben zu bilden. Weiters gleicht die Person einen Bereich mit einer ähnlichen Farbe mit ihrem Erfahrungsschatz ab, um einen solchen Bereich gegebenenfalls als eine Diskontinuität zu bewerten.

Die für das menschliche Auge erkennbaren Farben gehen bei Computer-implementierten Verfahren als Farbewerte ein. Farbwerte können nach definierten Codes definiert werden.

Die erfindungsgemäße Lösung basiert gleichwie die menschliche Wahrnehmung auf einem zweistufigen Detektionsansatz. Das erfindungsgemäße Verfahren zeichnet sich dadurch aus, dass sehr genaue Bildpositionsangaben von geometrischen Diskontinuitäten ermittelt werden. Aus den Bildpositionsangaben können Positionsangaben errechnet werden, welche Positionsangabe die Lage der Diskontinuität auf der Oberfläche des Körpers angeben.

Das erfindungsgemäße Verfahren zeichnet sich dadurch aus, dass nur Farbeigenschaftswerte der Oberfläche des Körpers ermittelt werden. Es werden keine weiteren physikalischen Parameter des Körpers bestimmt.

In einem ersten Verfahrensschritt werden die Werteteilbereiche mit abweichenden Farbeigenschaftswerten detektiert. Der erste Verfahrensschritt kann die Bedingung umfassen, dass eine Mindestanzahl von Bildpunkten abweichende Farbeigenschaften aufweisen. Hierdurch kann unterbunden werden, dass eine durch ein Störsignal oder ähnliches hervorgerufene Farbabweichung als eine Diskontinuität interpretiert wird. Der erste Verfahrensschritt schließt ein, dass eine Häufung von Bildpunkten und somit eine Mindestanzahl von Bildpunkten mit abweichenden Farbeigenschaften als ein erster Hinweis auf das Vorkommen einer Diskontinuität angesehen wird.

Die Mindestanzahl von Bildpunkten kann auch als ein Schwellenwert für eine Mindestgröße einer zu detektierenden Diskontinuität angesehen werden.

In einem zweiten Verfahrensschritt wird eine Überlagerungsbilddatenmenge auf ein Minimum oder Maximum untersucht. Der erste Verfahrensschritt liefert einen ersten Hinweis auf die Bildposition einer auf der Oberfläche des Hohlquerschnittes angeordneten Diskontinuität im Bild. Der zweite Verfahrensschritt liefert einen zweiten Hinweis auf die Bildposition einer auf der Oberfläche des Hohlquerschnittes angeordneten Diskontinuität.

Ein Farbeigenschaftswert kann beispielsweise ein Farbcode nach dem Stand der Technik wie RGB oder ein Grauwert sein. Der Fachmann wählt den dem erfindungsgemäßen Verfahren zu Grunde liegenden Farbeigenschaftswert in Abhängigkeit der ermittelbaren Farben der Oberfläche des Körpers. Weist der Körper im Wesentlichen nur Varianten eines bestimmten Farbwertes wie beispielsweise die Grautöne eines Metallquerschnittes oder der Oberfläche auf, so ist die Verwendung von Grautönen als Farbeigenschaftswerte ausreichend.

Die Durchführung des erfindungsgemäßen Verfahrens kann bedingen, dass der zu untersuchende Körper beleuchtet wird. Der Fachmann kann hierzu Lichtquellen mit gerichteten, vorzugsweise parallelen Lichtstrahlen verwenden. Nach der gängigen Lehre können LED-Lichtquellen eingesetzt werden. Zur Beleuchtung des Körpers kann beispielsweise ein LED-Ring verwendet werden, welcher sich ringförmig um den Bildsensor oder das Objektiv erstreckt.

Es können zur Durchführung des Verfahrens herkömmliche Digitalkameras verwendet.

Es können im zweiten Verfahrensschritt die Farbeigenschaftswerte der Bildpunkte eines ausgewählten Bildteilbereiches und/oder eine die Farbeigenschaftswerte beschreibende Farbeigenschaftsfunktion mittels einer mathematischen Funktion mathematisch überlagert werden.

Die mathematische Überlagerung kann durch eine Multiplikation (mathematische Faltung) und/oder Addition und/oder Subtraktion und/oder Division et cetera der Farbeigenschaftswerte der Bildpunkte und/oder des Verlaufes der Farbeigenschaftswerte der Bildpunkte mit einer Funktion und/oder einer Anzahl von Funktionen erfolgen.

Im zweiten Verfahrensschritt können die optisch wahrnehmbaren Farbeigenschaftswerte mit einem optischen Filter zur Generierung einer optisch wahrnehmbaren Überlagerungsbilddatenmenge überlagert werden.

Der zweite Verfahrensschritt kann auf der Anwendung des nach der gängigen Lehre bekannten Verfahrens der Generierung von neuronalen Netzen und dem ebenso nach der gängigen Lehren bekanntem Trainieren der neuronalen Netze aus Bilddaten basieren.

Der erste Verfahrensschritt und der zweite Verfahrensschritt können zueinander zeitlich parallel oder zeitlich aufeinanderfolgend in einer beliebigen Reihenfolge durchgeführt werden.

Die zu überlagernden mathematischen oder durch den optischen Filter definierten Funktionen können Referenzfunktionen sein, welche den Verlauf von Farbeigenschaftswerten von Bilddaten einer Oberfläche aufweisend eine Diskontinuität beschreiben. Das erfindungsgemäße Verfahren kann vorsehen, dass eine Referenzfunktion beschreibend eine Gruppe von Diskontinuitäten in einer Datenbank abgespeichert ist oder als eine Gruppe von Filtern vorliegt. Die Gruppe von Diskontinuitäten umfassen jene Diskontinuität, welche Diskontinuität unter Anwendung des erfindungsgemäßen Verfahrens detektiert werden soll.

Alternativ können die zu überlagernden mathematischen oder durch den optischen Filter definierten Funktionen auch Referenzfunktionen sein, welche den Verlauf von Farbeigenschaftswerten von Bilddaten einer Oberfläche aufweisend keine Diskontinuität beschreiben.

Die Funktion kann auch Umwelteinflüsse beschreiben und sohin den Einfluss der Umwelteinflüsse auf die Detektion der geometrischen Diskontinuitäten minimieren, da hierdurch eine durch Umwelteinflüsse bedingte Änderung der Farbeigenschaftswerte durch die Funktion geglättet wird. Dies ist aber nicht Gegenstand der beanspruchten Erfindung.

Eine Überlagerung des Verlaufes der Farbeigenschaftswerte mit einer Referenzfunktion beschreibend Referenzfarbeigenschaftswerte hat den Effekt, dass die Abweichungen in den Bilddaten wegen einer Koinzidenz mit der Funktion deutlich werden. Im Wesentlichen erwartet der Fachmann das Vorkommen von bestimmten Diskontinuitäten und kann aufgrund dieser Erwartungshaltung die Referenzfunktion auswählen. Vorzugsweise sind die Referenzfunktionen skalierbar, sodass unter Skalierung der Referenzfunktion der erwähnter Koinzidenzeffekt stärker ausprägbar ist.

Beispielsweise kann der Fachmann eine Schweißnaht als eine Diskontinuität erwarten.

Der Fachmann kann die Farbeigenschaftswerte mit einer Referenzfunktion mathematisch oder optisch überlagern, welche Referenzfunktion den üblichen Verlauf der Farbeigenschaftswerte einer Schweißnaht wiedergibt.

Das erfindungsgemäße Verfahren ist keinesfalls darauf beschränkt, dass der erste Hinweis und der zweite Hinweis ident sein müssen. Das erfindungsgemäße Verfahren kann den Verfahrensschritt umfassen, dass der erste Hinweis und der zweite Hinweis zur Bestimmung einer Position einer Diskontinuität abgeglichen werden.

Das erfindungsgemäße Verfahren kann umfassen, dass der Verlauf der Farbeigenschaftswerte an Bildpunkten eines Bildteilbereiches mit einer Referenzstörfunktion, welche Referenzstörfunktion den Verlauf von Störsignalen oder den inversen Verlauf von Störsignalen beschreibt, unter Generierung von weiteren Überlagerungsbilddatenmenge umfassend weitere Überlagerungsfarbeigenschaftswerte an den Bildpunkten überlagert wird.

In diesem Sinne können auch Filter angewandt werden, welche Filter einen ähnlichen Effekt aufweisen.

Die oben angeführten Umwelteinflüsse werden im Allgemeinen als eine mögliche Art von Störsignalen angesehen. Der Fachmann kennt nach der gängigen Lehre weitere Störsignale, welche Störsignale das Ergebnis verfälschen können. Das erfindungsgemäße Verfahren zeichnet sich dadurch aus, dass mögliche Störsignale durch eine Überlagerung mit Referenzstörfunktionen unter Ausnutzung der Koinzidenz deutlich gemacht werden können oder abgeschwächt werden können.

Das erfindungsgemäße Verfahren kann sich dadurch auszeichnen, dass von einem Körper mehrere Bildaufnahmen gemacht werden, wobei das erfindungsgemäße Verfahren auf jede Bildaufnahme angewandt wird. Letzteres kann wiederum einschließen, dass bei einer definierten Anzahl von übereinstimmenden ersten Hinweisen und zweiten Hinweisen eine Diskontinuität mit einer hinreichenden Genauigkeit erkannt wurde.

Der erste Verfahrensschritt kann einen ersten Hinweis liefern, welcher erster Hinweis ein erstes Wahrscheinlichkeitsmaß des Vorkommens einer Diskontinuität umfasst.

Der zweite Verfahrensschritt kann einen zweiten Hinweis liefern, welcher zweiter Hinweis ein zweites Wahrscheinlichkeitsmaß des Vorkommens einer Diskontinuität umfasst.

Der oben angeführte Abgleich des ersten Hinweises und des zweiten Hinweises kann in der Form erfolgen, dass das erste Wahrscheinlichkeitsmaß und das zweite Wahrscheinlichkeitsmaß einen Schwellenwert überschreiten müssen, sodass der erste Hinweis und der zweite Hinweis zu einer Aussage über das Vorhandensein einer Diskontinuität zusammengefasst werden können.

Das erfindungsgemäße Verfahren ist in vorteilhafter Weise sowohl auf ruhende Körper als auch auf bewegte Körper anwendbar. Insbesondere die oben angeführte Überlagerung der Farbeigenschaftswerte mit Referenzfunktionen, welche Referenzfunktionen Umwelteinflüsse beschreiben, erlaubt die Anwendung des erfindungsgemäßen Verfahrens auf bewegte Körper, da der Einfluss von Umwelteinflüssen wie die Aufwirbelung von Staub unterbunden werden kann.

Der Abgleich von Hinweisen kann bedingen, dass eine Anzahl von Bildaufnahmen innerhalb einer Zeitspanne zu machen ist, auf welche Anzahl von Bildaufnahmen das erfindungsgemäße Verfahren zur Generierung der Hinweise angewandt wird. Der Fachmann errechnet aus der geforderten Anzahl von Bildaufnahmen innerhalb einer Zeitspanne die erforderlichen Aufnahmen pro Sekunde.

Es können Bilddaten erstellt und/oder verwendet werden, welche Bilddaten Lichtstrahlen mit einer definierten Wellenform und/oder mit einer definierten Wellenlänge und/oder mit einer definierten Lichtfrequenz wiedergeben. Das erfindungsgemäße Verfahren kann die Verwendung von Filter nach dem Stand der Technik wie beispielsweise H-Wavelet Filter umfassen.

Es können auch Bilddaten in Form eines Negativbildes erstellt und/oder verwendet werden. Die Bilddaten können mit Hilfe von Bearbeitungstechniken nach dem Stand der Technik bearbeitet werden.

Das erfindungsgemäße Verfahren kann sich in Bezugnahme auf die Verwendung und/oder die Erstellung von Bilddaten mittels Filtern und/oder nach der Negativbildtechnik dadurch auszeichnen, dass in Bezugnahme auf die zu erwartende Diskontinuität nur bestimmte Lichtstrahlen untersucht werden. Hierdurch werden die Diskontinuitäten in einem stärkeren Kontrast visuell oder in Form von Bilddaten dargestellt. Das erfindungsgemäße Verfahren kann sich in Bezugnahme auf die Verwendung von Filtern oder der Negativbildtechnologie durch eine hohe Effektivität aus.

Das erfindungsgemäße Verfahren kann sich dadurch auszeichnen, dass ein eine geometrische Diskontinuität umfassender Netzteilbereich als eine Referenzdiskontinuität in der Datenbank abgespeichert wird. Hierdurch wird die Datenbank, in welcher im weitesten Sinne Formen der Diskontinuitäten abgespeichert sind, im Wesentlichen um eine Information beschreibend die Form eines eine Diskontinuität aufweisenden Netzteilbereiches laufend erweitert.

Die laufende Erweiterung der Datenbank durch Netzbereiche, welche als eine Diskontinuität umfassende Netzteilbereiche klassifiziert sind, schließt ein, dass dieser Vorgang systemgesteuert und/oder benutzergesteuert sein kann.

Diese laufende Erweiterung der Datenbank durch als eine Diskontinuität klassifizierte Netzbereiche ist insbesondere bei einer Anwendung des erfindungsgemäßen Verfahrens bei natürlichen Werkstoffen vorteilhaft. In hierzu analoger Weise können die Farbeigenschaftswerte der Bildpunkte eines eine geometrische Diskontinuität umfassenden Werteteilbereiches in der Datenbank abgespeichert werden. Durch diesen Verfahrensschritt können bei einer Erstreckung der geometrischen Diskontinuität über mehrere Bildpunkte auch Verlaufe oder Muster der Farbeigenschaftswerte über die Bildpunkte der geometrischen Diskontinuität abgespeichert werden.

Das erfindungsmäße Verfahren kann sohin Routinen umfassen, mittels welcher Routinen eine Farbeigenschaftswerte von Bildpunkten umfassende Datenbank laufend erweitert wird, welche Bildpunkte eine geometrische Diskontinuität umfassen. Es können hierbei Informationen über Farbeigenschaftswerte von einzelnen Bildpunkten und/oder über Verläufe von Farbeigenschaftswerten über mehrere Bildpunkte abgespeichert werden.

Die Verläufe von Farbeigenschaftswerten über mehrere Bildpunkte können über mathematische Funktionen beschrieben werden.

Der Fachmann erkennt, dass das obige Verfahren im Wesentlichen auf jede Körperform anwendbar ist, welche Körperform eine mittels Bildaufnahmetechniken aufnehmbare Oberfläche umfasst. Dies kann jedoch bedingen, dass bekannt ist, wenn ein Körper im Bild abgebildet ist.

Der zweite Verfahrensschritt, in welchem zweiten Verfahrensschritt die Überlagerungsbilddatenmenge generiert wird, kann sich dadurch auszeichnen, dass der Bildteilbereich in Abhängigkeit des Auftretens eines Maximumwertes und/oder eines Miniumwertes an Bildpunkten gewählt wird.

Es wird vorzugsweise der Bildteilbereich durch eine Person oder durch selbständige Verfahrensroutinen so gewählt, dass der Bildteilbereich die den Maximumwert oder Minimumwert umfassenden Bildpunkte sowie zu diesen Bildpunkten benachbarte weitere Bildpunkt einschließt, wobei der Maximumwert oder der Minimumwert durch Anwendung des erfindungsgemäßen Verfahrens unter Verwendung eines vorhergegangenen Bildteilbereiches ermittelt wird. Das erfindungsgemäße Verfahren kann sich dadurch auszeichnen, dass die Bilddatenmenge reduziert wird, da der Bildteilbereich kleiner ist als der vorhergegangene Bildteilbereich.

Das erfindungsgemäße Verfahren kann auch umfassen, dass die Anwesenheit eines Körpers im Bild detektiert und verifiziert wird, wobei die Kanten des Körpers durch Verfahren nach dem Stand der Technik detektiert werden und die Verifikation über die virtuelle Konstruktion von Fluchtpunkten erfolgt.

Das erfindungsgemäße Verfahren wird weiters anhand der folgenden Figurenbeschreibung und der nachstehenden Figuren erläutert. Es sind in den Figuren die nachstehenden Elemente durch die vorangestellten Bezugszeichen gekennzeichnet.
1 Körper
2 Querschnitt
3 Kanten
4 Schweißnaht
5 rechte Wand
6 frei
7 Bewegungsrichtung
8 Reflexionsfläche Licht
9 Werteteilbereich
10 rechteckiger Bereich
11 weiterer Wertebereich

Figur 1 und Figur 2 zeigen schwarz-weiß Bilder des zu untersuchenden Körpers.

Figur 3 zeigt einen Ausschnitt der in Figur 2 dargestellten Ansicht des Körpers, wobei Figur 3 unter Anwendung eines Filters erstellt wurde.

Figur 4 zeigt ein Diagramm, welches Diagramm aus den in Figur 3 abgebildeten Farbeigenschaftswerten abgeleitet ist.

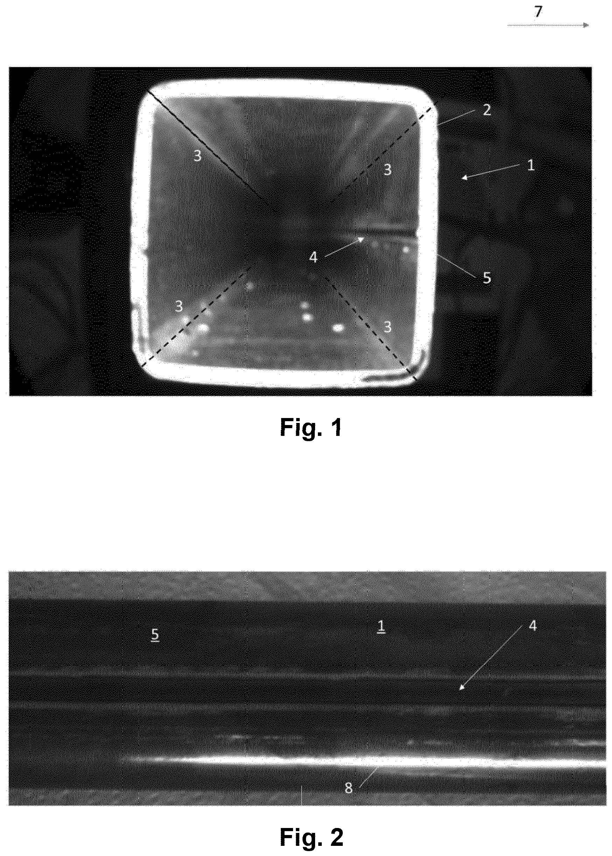

Figur 1 zeigt einen Hohlkörper als Körper 1 mit einem Querschnitt 2. Die Blickrichtung der in Figur 1 gezeigten Ansicht auf den Körper 1 ist parallel zu der Längsachse des Körpers 1.

Bei dem in Figur 1 gezeigten Ausführungsbeispiel wird ein eine Länge von 12,0m und einen Querschnitt von circa 10,0cm zu 10,0cm aufweisendes Rohr als Körper 1 mit einer hohen Geschwindigkeit - bis zu 6m/sec - an Kameras vorbeibewegt.

Figur 1 zeigt eine Bewegungsrichtung 7 der Rohre in einer Anlage nach dem Stand der Technik an. In der Anlage werden die Rohre in einem Durchlaufverfahren an den Kameras vorbeibewegt. Die zur Durchführung des erfindungsgemäßen Verfahrens notwendigen Kameras sind in der Anlage integriert.

Es ist Aufgabe des erfindungsgemäßen Verfahrens in einem ersten Schritt den Körper in dem durch die Kamera aufgenommenen Bild zu detektieren und in einem zweiten Schritt Diskontinuitäten in Form einer Schweißnaht an der Oberfläche des Körpers 1 zu erkennen. Der Schritt des Erkennens der Diskontinuitäten schließt ein, dass auch die Bildposition der Diskontinuität bestimmt wird, sodass in weiterer Folge das Rohr in Abhängigkeit der Position und/oder in Abhängigkeit einer Sollposition der Schweißnaht positioniert werden kann.

Der erste Verfahrensschritt und der zweite Verfahrensschritt des erfindungsgemäßen Verfahrens können im Wesentlichen unabhängig voneinander durchgeführt werden. Der zweite Schritt kann bedingen, dass die Präsenz des Rohres als Körper bekannt ist, was der Fachmann auch durch andere Methoden nach dem Stand der Technik als durch den ersten Schritt des erfindungsgemäßen Verfahrens feststellen kann.

Zur Durchführung des erfindungsgemäßen Verfahrens wird der Körper mit einer Lichtstrahlen emittierenden Lichtquelle beleuchtet und mittels Bilddaten ausgebenden Kameras aufgenommen.

Die Kameras sind hierzu im Wesentlichen an den Rohrachsen ausgerichtet. Die Kamera zur Aufnahme eines in Figur 1 bespielhaft gezeigten Bildes ist parallel zu der Längsachse des Körpers 1 ausgerichtet. Der Fokus der Kamera für das in Figur 1 umfasste Bild ist so eingestellt, dass ein Arbeitsbereich von 20,0-200,0cm scharf abgebildet wird.

Die Aufnahmerichtung der weiteren Kamera zur Aufnahme eines in Figur 2 beispielhaft gezeigten Bildes ist im Wesentlichen rechtwinkelig zu der zu untersuchenden Oberfläche ausgerichtet.

Bei den in Figur 1 und Figur 2 gezeigten Bilder umfassen die Bilddaten pro Bildpunkt einen Grauwert. Eine Reduktion der Bilddaten von Farbeigenschaftswerten auf Graudaten bringt eine Reduktion der Datenmenge mit sich. Das erfindungsgemäße Verfahren zeichnet sich dadurch aus, dass hinreichend genaue Hinweise geliefert werden, sodass diese Reduktion der Datenmenge möglich ist.

In einem ersten Schritt werden die Kanten 3 des Körpers 1 detektiert, wobei der Fachmann bei der Durchführung des erfindungsgemäßen Verfahrens keinesfalls die Detektion aller Kanten durchführen muss. Es kommen hierbei Verfahren nach dem Stand der Technik zur Kantendetektion zur Anwendung. Bei dem in den Figuren veranschaulichten Verfahren werden die Kanten über den Gradienten der Grauwerte benachbarter Bildpunkte ermittelt.

Anhand der detektierten Kanten können die Fluchtpunkte dieser Kanten ermittelt werden und hierdurch die Anwesenheit des Körpers 1 im Bild verifiziert werden.

In Figur 1 sind die ungefähren Lagen der ermittelten Kanten 3 durch gestrichelte Linien eingetragen. Die aus den Kanten 3 ermittelbaren Fluchtpunkte umfassen bei dem in Figur 1 veranschaulichten Ausführungsbeispiel einen im "Unendlichen" gelegenen Fluchtpunkt.

Die Bestimmung zumindest eines im "Unendlichen" gelegenen Fluchtpunktes der Kanten des Körpers hat den Vorteil, dass der Körper ohne einen großen Rechenaufwand von der Umgebung differenzierbar ist. Die Umgebung wird bei der hier diskutierten Ausführungsform durch eine Halle gebildet, in welcher Halle die Anlage zur Verarbeitung und/oder zum Transport der Rohre als Körper 1 situiert ist.

In einem zweiten Schritt werden die Diskontinuitäten sowie die Bildposition dieser detektiert.

Der Fachmann erkennt, dass der in Figur 1 in einer Querschnittsansicht gezeigte Hohlkörper 1 in der rechten Wand 5 eine Schweißnaht 4 umfasst. Für das menschliche Auge ist die Schweißnaht 4, welche eine geometrische Diskontinuität darstellt, anhand des Verlaufes der Grautöne in der rechten Wand 5 und durch das Ausmachen von Teilflächen der rechten Wand erkennbar.

Figur 2 zeigt eine Frontalansicht der rechten Wand 5. Die Kamera zur Aufnahme des in Figur 2 gezeigten Bildes ist hierzu im Wesentlichen parallel zu einer Querschnittsachse des Körpers ausgerichtet. Auch hier ist die eine Diskontinuität darstellende Schweißnaht 4 anhand des Verlaufes der Grautöne und durch das Ausmachen von Teilflächen erkennbar.

Figur 2 zeigt neben dem Rohr als Körper 1 mitsamt der Schweißnaht 4 eine helle Fläche, welche helle Fläche eine Reflexionsfläche 8 von Licht ist, mit welchem Licht der Körper 1 zum Anfertigen der in Figur 1 und Figur 2 gezeigten Bilder beleuchtet wird. Es ist auch Aufgabe des erfindungsgemäßen Verfahrens, derartige Reflexionsflächen 8 als solche zu erkennen.

Das subjektive Ausmachen von Teilflächen durch eine Person schließt ein, dass die Person die erkannten Teilflächen mit ihrem Erfahrungsschatz über Diskontinuitäten abgleicht und auch dem entsprechend die Teilflächen in Abhängigkeit der Farbeigenschaftswerte wählt.

Das erfindungsgemäße Verfahren versucht, diese kurz dargestellte und nach der gängigen Lehre bekannte menschliche Wahrnehmung durch ein Computer-implementiertes Verfahren nachzustellen.

Es werden hierzu die Farbeigenschaftswerte an den einzelnen Bildpunkten verglichen und Werteteilbereiche mit abweichenden Farbeigenschaftswerten ermittelt, welche abweichenden Farbeigenschaftswerte sich um einen Grenzwert von einem über die Manteloberfläche gemessenen Farbdurchschnittsmaß oder von einem Dominanzfarbeigenschaftswert unterscheiden. Es wird sohin nach Teilflächen mit vom Durchschnitt abweichenden Farbwerten beziehungsweise mit den dominanten Farbwerten innerhalb eines durch Grenzwerte definierten Wertebereiches gesucht.

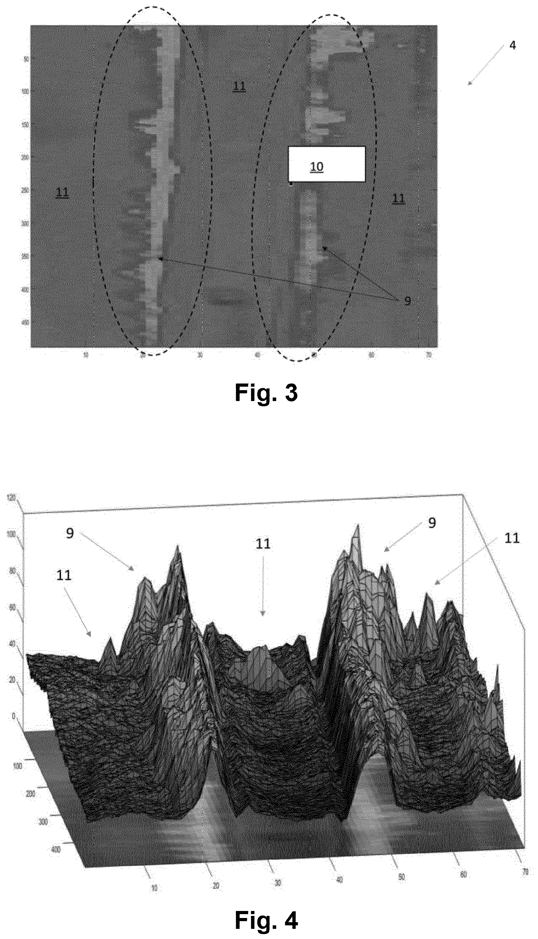

Figur 3 zeigt einen Ausschnitt der in Figur 2 dargestellten Schweißnaht, wobei die Figur 3 mittels eines Kantendetektors unter Anwendung der gängigen Lehre nach Sobel oder Lenny erstellt wurde. Mit Hilfe des Kantendetektors werden nur jene Bildpunkte mit den Eigenschafen angezeigt, bei welchen Bildpunkten der Gradient einer die Farbwerte beschreibenden Funktion in horizontaler Richtung oder in vertikaler Richtung eine hohe Steigung aufweist. Figur 4 zeigt ein aus der Figur 3 abgeleitetes Diagramm. Das in Figur 4 dargestellte Diagramm stellt auf der z-Achse einen Farbwert an einem Bildpunkt in Abhängigkeit der in der xy-Fläche dargestellten Position des Bildpunktes dar. Figur 4 umfasst weiters das in Figur 3 enthaltene Bild in einer dreidimensionalen Darstellung.

Das Erkennen von Diskontinuitäten mit Hilfe des erfindungsgemäßen Verfahrens basiert im Wesentlichen auf einer der in Figur 3 und Figur 4 dargestellten Grafik, wobei die Durchführung des erfindungsgemäßen Verfahrens keinesfalls die Erstellung derartiger Grafiken erfordert, sondern auch ausschließlich auf der Verarbeitung von Daten basieren kann. Zur Veranschaulichung des erfindungsgemäßen Verfahrens wird dieses anhand der Figuren 3 und 4 beispielhaft erläutert.

Figur 3 umfasst einen rechteckigen Bereich 10. In diesem Bereich 10 wurden Angaben überdeckt, welche Angaben in einer zur Anzeige in Figur 3 zu kleinen Schrift geschrieben sind und keinen Einfluss auf den Schutzgegenstand der Patentanmeldung haben.

Figur 3 zeigt einen Werteteilbereich 9, welcher Werteteilbereich 9 von einem Durchschnittsmaß der Farbeigenschaftswerte abweichende Farbeigenschaftswerte umfasst.

Der Werteteilbereich 9 umfasst sohin Farbeigenschaftswerte, welche von dem Dominanzfarbeigenschaftswert um zumindest einen definierten Grenzwert abweichen.

Unter einem Dominanzfarbeigenschaftswert ist jener Bereich an Farbeigenschaftswerten zu verstehen, welcher über die Mantelfläche dominiert. Figur 3 zeigt den Sonderfall, dass der Durchschnittsfarbwert auch der Dominanzfarbeigenschaftswert ist.

Der Fachmann erkennt, dass in Figur 3 und Figur 4 zwei Teilbereiche als derartige Wertebereiche 9 mit abweichenden Farbeigenschaftswerten auszumachen sind, während drei weitere Werteteilbereiche mit Durchschnittsfarbeigenschaften gleich den Dominanzfarbeigenschaftswerten zu erkennen sind.

Es sind die Werteteilbereiche 4 in Figur 3 in Ergänzung zu den Bezugszeichen mit einer gestrichelten Ellipse gekennzeichnet; die weiteren Teilbereiche sind nicht weiter gekennzeichnet.

In Figur 4 sind die Wertebereiche 4 nur durch Bezugszeichen gekennzeichnet.

Das Vorhandensein der zwei Teilbereiche als Werteteilbereiche 9 mit abweichenden Farbeigenschaftswerten wird als erster Hinweis auf eine Diskontinuität auf der Manteloberfläche gewertet.

Das erfindungsgemäße Verfahren zeichnet sich insbesondere dadurch aus, dass der erste Hinweis auf das Vorhandensein einer Diskontinuität durch eine weitere Analyse der in Figur 1 und Figur 2 umfassten Bilder verifiziert wird.

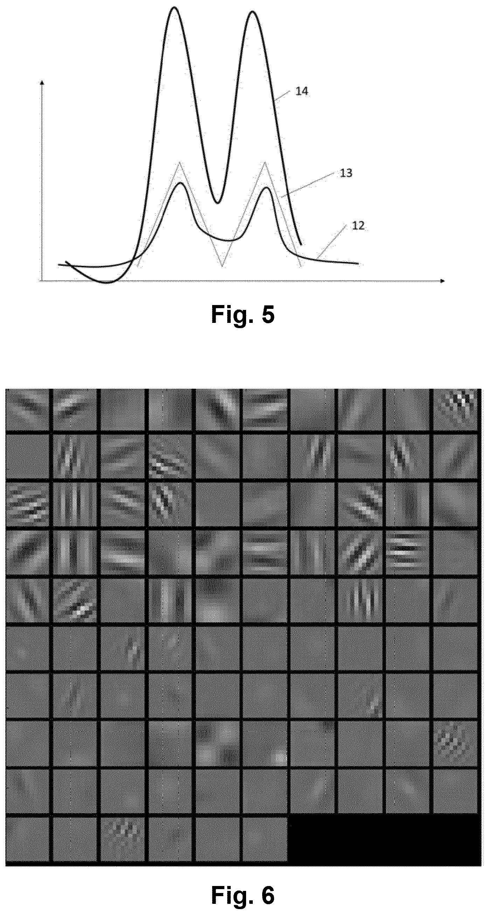

Figur 5 zeigt durch den Bildpunktegraphen 12 den prinzipiellen Verlauf der in Figur 4 gezeigten Flächenkurve entlang einer zu der x-Achse parallelen Schnittebene. Die genaue Lage ist der Schnittebene in der Figur 4 und der genaue Verlauf der in Figur 5 gezeigten Graphen ist für die folgende Diskussion der durch die Figur 5 veranschaulichten Effekte der Anwendung des erfindungsgemäßen Verfahrens belanglos.

Der Bildpunktegraph 12 stellt sohin den Verlauf der Farbeigenschaftswerte dar. Der Bildpunktegraph 12 ist eine unter Reduzierung der zu bearbeitenden Datenmenge angenäherte, hinreichend genaue Darstellung des Verlaufes der in Figur 4 dargestellten Flächenkurve entlang einer zu der x-Achse parallelen Schnittebene.

Figur 5 umfasst weiters eine Referenzkurve 13. Der Fachmann wählt die Referenzkurve 13 und gegebenenfalls die Position der Referenzkurve 13 durch seine Fachkenntnis.

Die Referenzkurve 13 kann in Hinblick auf eine erwartete Diskontinuität gewählt werden.

Der Fachmann erkennt, dass die Anwendung des erfindungsgemäßen Verfahrens auch die Verwendung von mehreren Referenzkurven erlaubt, wobei in Figur 5 zur Wahrung der Übersichtlichkeit nur die Verwendung einer Referenzkurve dargestellt ist.

Durch Anwendung des zweiten Verfahrensschrittes des erfindungsgemäßen Verfahrens kommt es zur Faltung Bildpunktegraphen 12 und des Referenzgraphen 13 unter Bildung eines Überlagerungsgraphen 14.

Figur 6 zeigt ein optisches Referenzmodell umfassend Referenzkurven zur Überlagerung mit einem Teilbereich der in Figur 4 gezeigten Flächenkurve.

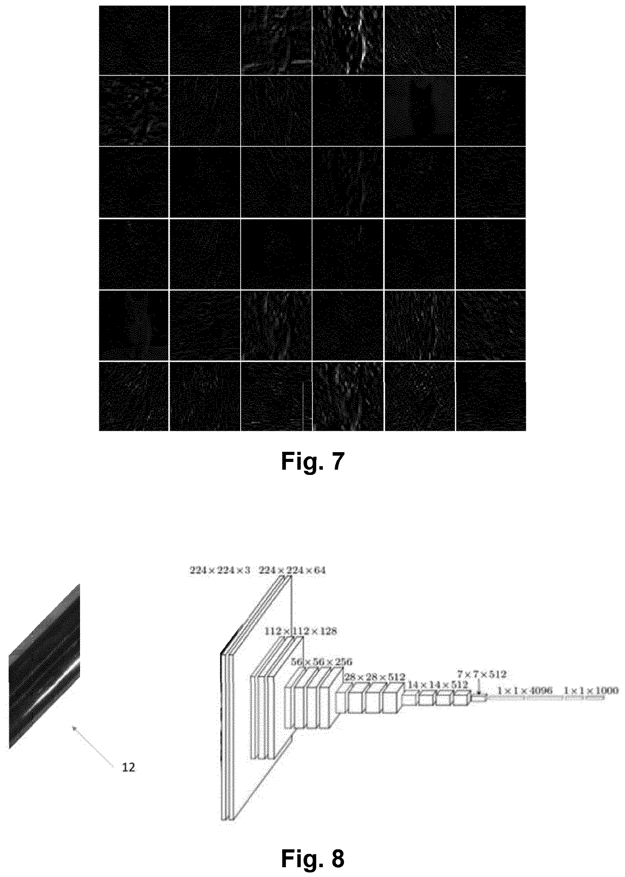

Figur 7 zeigt das Ergebnis einer Überlagerung eines Teilbereiches der in Figur 4 gezeigten Flächenkurve mit dem in Figur 6 gezeigten Referenzmodell. Die Diskontinuitäten sind anhand der hellen Teilbereiche gut erkennbar.

Diese Verifizierung kann durch das Ausbilden von neuronalen Netzen nach der gängigen Lehre erfolgen, was unter Bezugnahme auf die Figur 8 erläutert wird.

Figur 8 zeigt ein Bild 12, welches Bild 12 eine Größe von 224x224 aufweist. Das Bild 12 umfasst Bilddaten mit Farbeigenschaftswerten pro Bildpunkt. Es werden die Bilddaten des Bildes 12 mit zwei Referenzfunktionen überlagert, wodurch zwei so genannten Ebenen gebildet werden. Die Ebenen umfassen jeweils eine Überlagerungsbilddatenmenge, welche durch eine Multiplikation der Farbeigenschaftswerte mit jeweils einer Funktion generiert werden. Es werden sohin bei dem in Figur 8 gezeigte Ausführungsbeispiel zwei Überlagerungsbilddatenmengen generiert, welche jeweils Maximumwerte und Minimumwerte umfassen.

Das Auftreten dieser Maximumwerte und Minimumwerte wird als ein zweiter Hinweis auf das Vorhandensein von geometrischen Diskontinuitäten interpretiert.

Dem entsprechend wird der Bildteilbereich bei der Überlagerung der Bilddaten mit drei weiteren Funktionen gewählt. Während bei der ersten Überlagerung der Bilddaten mit zwei Funktionen der Bildteilbereich der Größe des Bildes 12 entsprach, kann bei der zweiten Überlagerung der Bildteilbereich erheblich reduziert werden.

Der Fachmann kann die Überlagerung der Bilddaten n-mal durchführen und dementsprechend den Bildteilbereich verkleinern und das örtliche Vorhandensein der Diskontinuität einschränken.

## Patentansprüche

1. Computerimplementiertes Verfahren zur Ermittlung von Hinweisen von geometrischen Diskontinuitäten (4) an der Oberfläche der Mantelfläche eines Körpers (1),
welcher Körper (1) mit einer Lichtstrahlen emittierenden Lichtquelle beleuchtet ist und
welcher Körper (1) mittels einer Bilddaten ausgebenden Kamera aufgenommen wird,
welche Bilddaten Farbeigenschaftswerte an einem Bildpunkt umfassen,
wobei
- die Farbeigenschaftswerte an den einzelnen Bildpunkten verglichen werden und eine in einem Werteteilbereich (9) der Mantelfläche ermittelte Häufung von abweichenden Farbeigenschaftswerten,
welche abweichende Farbeigenschaftswerte von einem Farbdurchschnittsmaß der Farbeigenschaftswerte der Mantelfläche oder von einem Dominanzfarbeigenschaftswert um einen definierten Grenzwert abweichen, als ein erster Hinweis auf eine Bildposition einer geometrische Diskontinuität (4) an Bildpunkten benachbart zu dem Werteteilbereichoder im Werteteilbereich interpretiert wird, und
- der Verlauf der Farbeigenschaftswerte an Bildpunkten eines Bildteilbereiches mit einer Referenzfunktion (13), welche Referenzfunktion den Verlauf von Farbeigenschaftswerten von Bilddaten einer Oberfläche aufweisend entweder eine Diskontinuität oder keine Diskontinuität beschreibt, zur Generierung von einer Überlagerungsbilddatenmenge (14) umfassend Überlagerungsfarbeigenschaftswerte an den Bildpunkten überlagert wird, und ein Maximumwert und/oder ein Minimumwert in der Überlagerungsbilddatenmenge an einem Bildpunkt als ein zweiter Hinweis auf eine geometrische Diskontinuität (4) interpretiert wird.

2. Verfahren nach Anspruch 1, **dadurch gekennzeichnet, dass** der erste Hinweis und der zweite Hinweis zur Bestimmung einer Position einer Diskontinuität (4) abgeglichen werden.

3. Verfahren nach einem der Ansprüche 1 bis 2, **dadurch gekennzeichnet, dass** der Verlauf der Farbeigenschaftswerte an Bildpunkten eines Bildteilbereiches mit einer Referenzstörfunktion, welche Referenzstörfunktion den Verlauf von Störsignalen oder den inversen Verlauf von Störfunktionen beschreibt, unter Generierung von weiteren Überlagerungsbilddatenmenge umfassend weitere Überlagerungsfarbeigenschaftswerte an den Bildpunkten überlagert wird.

4. Verfahren nach einem der Ansprüche 1 bis 3, **dadurch gekennzeichnet, dass** die Bilddaten erstellt und/oder verwendet werden, welche Bilddaten Lichtstrahlen mit einer definierten Wellenform und/oder mit einer definierten Wellenlänge und/oder mit einer definierten Lichtfrequenz wiedergeben.

5. Verfahren nach einem der Ansprüche 1 bis 4, **dadurch gekennzeichnet, dass** die Bilddaten in Form eines Negativbildes erstellt und/oder verwendet werden.

6. Verfahren nach einem der Ansprüche 1 bis 5, **dadurch gekennzeichnet, dass** ein eine geometrische Diskontinuität (4) umfassender Netzteilbereich als eine Referenzdiskontinuität in einer Datenbank abgespeichert wird.

7. Verfahren nach einem der Ansprüche 1 bis 6, **dadurch gekennzeichnet, dass** die Farbeigenschaftswerte der Bildpunkte eines eine geometrische Diskontinuität (4) umfassenden Werteteilbereiches in einer Datenbank abgespeichert werden.

8. Verfahren nach einem der Ansprüche 1 bis 7, **dadurch gekennzeichnet, dass** der Bildteilbereich in Abhängigkeit des Auftretens eines Maximumwertes und/oder eines Minimumwertes an Bildpunkten gewählt wird.

9. Verfahren nach einem der Ansprüche 1 bis 8, **dadurch gekennzeichnet, dass** die Kanten (3) des im Bild zur Gänze abbildbaren Körpers (1) detektiert werden und unter Bestimmung der durch die Kanten definierten Fluchtpunkte die Anwesenheit eines Körpers (1) verifiziert wird.

## Claims

1. A computer-implemented method for determining indications of geometrical discontinuities (4) on the surface of the surface of a body (1),
which body (1) is illuminated using a light source emitting light beams, and
which body (1) is recorded using a camera issuing image data,
which image data comprises colour characteristics values on an image point,
wherein
- the colour characteristics values are compared at the individual image points and an accumulation of deviant colour characteristics values determined in a value subarea (9) of the surface,
which deviant colour characteristics values deviate from a colour average of the colour characteristics values of the surface or from a dominant colour characteristics value by a predefined limit value,
is interpreted as a first indication of an image position of a geometrical discontinuity (4) at image points neighbouring the value subarea or in the value subarea, and
- the course of the colour characteristics values on image points of an image subarea is superimposed with a reference function (13), which reference function (13) describes the course of colour characteristics values of image data of a surface having either a discontinuity or no discontinuity, to generate a superimposition image data quantity (14) comprising superimposition colour characteristics values on the image points, and a maximum value and/or a minimum value in the superimposition image data quantity on an image point is interpreted as second indication of a geometrical discontinuity (4).

2. The method of claim 1, **characterised in that**
the first indication and the second indication are matched to determine a position of a discontinuity (4).

3. The method of any one of claims 1 and 2, **characterised in that**
the course of the colour characteristics values on image points of an image subarea is superimposed with a reference interference function, which reference interference function describes the course of interference signals or the inverse course of interference functions, thereby generating a further superimposition image data quantity comprising further superimposition colour characteristics values on the image points.

4. The method of any one of claims 1 to 3, **characterised in that**
the image data is created and/or used, which image data render light beams with a predefined waveform and/or wavelength and/or light frequency.

5. The method of any one of claims 1 to 4, **characterised in that** the image data is created and/or used in the form of a negative image.

6. The method of any one of claims 1 to 5, **characterised in that** a network subarea comprising a geometrical discontinuity (4) is saved in a database as a reference discontinuity.

7. The method of any one of claims 1 to 6, **characterised in that**
the colour characteristics values of the image points of a value subarea comprising a geometrical discontinuity (4) are saved in a database.

8. The method of any one of claims 1 to 7, **characterised in that**
the image subarea is chosen depending on the occurrence of a maximum value and/or a minimum value on image points.

9. The method of any one of claims 1 to 8, **characterised in that**
the edges (3) of the body (1), which body can be entirely depicted in the image, are detected and the presence of a body (1) is verified by determining the vanishing points defined by the edges.

## Revendications

1. Procédé mis en oeuvre par ordinateur pour déterminer des indications de discontinuités géométriques (4) à la surface de l'enveloppe d'un corps (1),
ledit corps (1) étant éclairé par une source lumineuse émettant des rayons lumineux et ledit corps (1) étant enregistré au moyen d'une caméra fournissant des données d'image, lesdites données d'image comprenant des valeurs de propriétés de couleur à niveau d'un point d'image,
où
- les valeurs de propriétés de couleur au niveau des différents points d'image sont comparées et une accumulation de valeurs de propriétés de couleur divergentes déterminée dans un sous-domaine de valeurs (9) de la surface d'enveloppe, lesdites valeurs de propriétés de couleur divergentes différant d'une mesure moyenne de couleur des valeurs de propriétés de couleur de la surface d'enveloppe ou d'une valeur de propriété de couleur dominante par une valeur limite définie, est interprétée comme une première indication d'une position d'image d'une discontinuité géométrique (4) au niveau de points d'image adjacents au sous-domaine de valeurs ou dans le sous-domaine de valeurs, et
- l'évolution des valeurs de propriétés de couleur au niveau des points d'image d'une sous-zone d'image est superposée avec une fonction de référence (13), ladite fonction de référence décrivant l'évolution des valeurs de propriétés de couleur de données d'image d'une surface présentant soit une discontinuité soit aucune discontinuité, pour générer une quantité de données d'image de superposition (14) comprenant des valeurs de propriétés de couleur de superposition au niveau des points d'image,
et une valeur maximale et/ou une valeur minimale dans la quantité de données d'image de superposition au niveau d'un point d'image est interprétée comme une seconde indication d'une discontinuité géométrique (4).

2. Procédé selon la revendication 1, **caractérisé en ce que**
la première indication et la deuxième indication sont comparées pour déterminer la position d'une discontinuité (4).

3. Procédé selon l'une des revendications 1 à 2, **caractérisé en ce que**
l'évolution des valeurs de propriétés de couleur au niveau des points d'image d'une sous-zone d'image est superposée avec une fonction de dérangement de référence, ladite fonction de dérangement de référence décrivant l'évolution de signaux parasites ou l'évolution inverse de fonctions de dérangement, en générant d'autres quantités de données d'image de superposition comprenant d'autres valeurs de propriétés de couleur de superposition au niveau des points d'image.

4. Procédé selon l'une des revendications 1 à 3, **caractérisé en ce que**
les données d'image sont créées et/ou utilisées, lesdites données d'image reproduisant des rayons lumineux avec une forme d'onde définie et/ou avec une longueur d'onde définie et/ou avec une fréquence lumineuse définie.

5. Procédé selon l'une des revendications 1 à 4, **caractérisé en ce que**
les données d'image sont créées et/ou utilisées sous la forme d'une image négative.

6. Procédé selon l'une des revendications 1 à 5, **caractérisé en ce qu'**un sous-secteur de réseau comprenant une discontinuité géométrique (4) est enregistrée dans une base de données en tant que discontinuité de référence.

7. Procédé selon l'une des revendications 1 à 6, **caractérisé en ce que**
les valeurs de propriétés de couleur des points d'image d'un sous-domaine de valeurs comprenant une discontinuité géométrique (4) sont enregistrées dans une base de données.

8. Procédé selon l'une des revendications 1 à 7, **caractérisé en ce que**
la sous-zone d'image est sélectionnée en fonction de la présence d'une valeur maximale et/ou d'une valeur minimale au niveau des points d'image.

9. Procédé selon l'une des revendications 1 à 8, **caractérisé en ce que**
les arêtes (3) du corps (1) qui peut être reproduit dans son intégralité dans l'image sont détectées et la présence d'un corps (1) est vérifiée en déterminant les points de fuite définis par les arêtes.
